(19) **Europäisches Patentamt European Patent Office Office européen des brevets**

(11) **EP 1 459 464 B1**

(12) **FASCICULE DE BREVET EUROPEEN**

(45) Date de publication et mention
de la délivrance du brevet:
**08.09.2010 Bulletin 2010/36**

(21) Numéro de dépôt: **02805365.0**

(22) Date de dépôt: **10.12.2002**

(51) Int Cl.:
*H04B 10/10* (2006.01)

(86) Numéro de dépôt international:
**PCT/FR2002/004268**

(87) Numéro de publication internationale:
**WO 2003/055108 (03.07.2003 Gazette 2003/27)**

(54) **SYSTEME DE TRANSMISSION OPTIQUE EN PROPAGATION LIBRE**

OPTISCHES FREIAUSBREITUNGSÜBERTRAGUNGSSYSTEM

FREE-PROPAGATION OPTICAL TRANSMISSION SYSTEM

(84) Etats contractants désignés:
**AT BE BG CH CY CZ DE DK EE ES FI FR GB GR
IE IT LI LU MC NL PT SE SI SK TR**

(30) Priorité: **18.12.2001 FR 0116389**

(43) Date de publication de la demande:
**22.09.2004 Bulletin 2004/39**

(73) Titulaire: **Thales**
**75008 Paris (FR)**

(72) Inventeurs:
• **POCHOLLE, Jean-Paul**
**F-94117 Arcueil cedex (FR)**
• **DOLFI, Daniel**
**F-94117 Arcueil cedex (FR)**
• **SIRTORI, Carlo**
**F-94117 Arcueil cedex (FR)**

(74) Mandataire: **Henriot, Marie-Pierre et al
Marks & Clerk France
Conseils en Propriété Industrielle
Immeuble " Visium "
22, avenue Aristide Briand
94117 Arcueil Cedex (FR)**

(56) Documents cités:
**WO-A-00/79690      US-A- 5 777 768
US-B1- 6 243 182**

• **GMACHI C ET AL: "QUANTUM CASCADE
LASERS WITH A HETEROGENEOUS CASCADE:
TWO-WAVELENGTH OPERATION" APPLIED
PHYSICS LETTERS, AMERICAN INSTITUTE OF
PHYSICS. NEW YORK, US, vol. 5, no. 79, 30 juillet
2001 (2001-07-30), pages 572-574, XP001086856
ISSN: 0003-6951 cité dans la demande**

**Description**

La présente invention concerne un système de transmission optique en propagation libre et s'applique notamment aux télécommunications optiques.

Dans le domaine des télécommunications optiques, on est amené dans certains types d'applications, à rechercher une communication optique directe, en propagation libre dans l'atmosphère. Outre un coût plus faible, la transmission par faisceaux optiques en propagation libre permet de s'affranchir d'un réseau de fibres optiques ce qui ouvre le domaine spectral sur lequel peut être réalisée une transmission de données et permet une plus grande discrétion de transmission.

Le document US-A-5 777 768 décrit un système de transmission optique en propagation libre d'au moins un signal d'informations, comprenant des moyens d'émission lumineuse et des moyens de détection optoélectronique, lesdits moyens d'émission émettant simultanément pour chaque signal à transmettre une pluralité de faisceaux laser qui sont transmis à travers trajets substantiellement parallèles.

Les systèmes classiques de transmission optique dans l'atmosphère utilisent soit la détection directe, soit la détection hétérodyne. Il s'avère cependant que les effets de turbulence de l'atmosphère pénalisent fortement la transmission en perturbant le plan d'onde.

Pour un système à détection directe, les effets de turbulence se traduisent par une fluctuation spatiale du faisceau qui voit ses propriétés de focalisation, au niveau du photodétecteur, se dégrader. On peut même observer un évanouissement du signal lié au déplacement du faisceau dans le plan focal, la surface du photodétecteur étant finie et sa position fixée. Cet effet est d'autant plus important pour des débits de transmission élevés, la taille de la surface sensible du détecteur devant être plus faible.

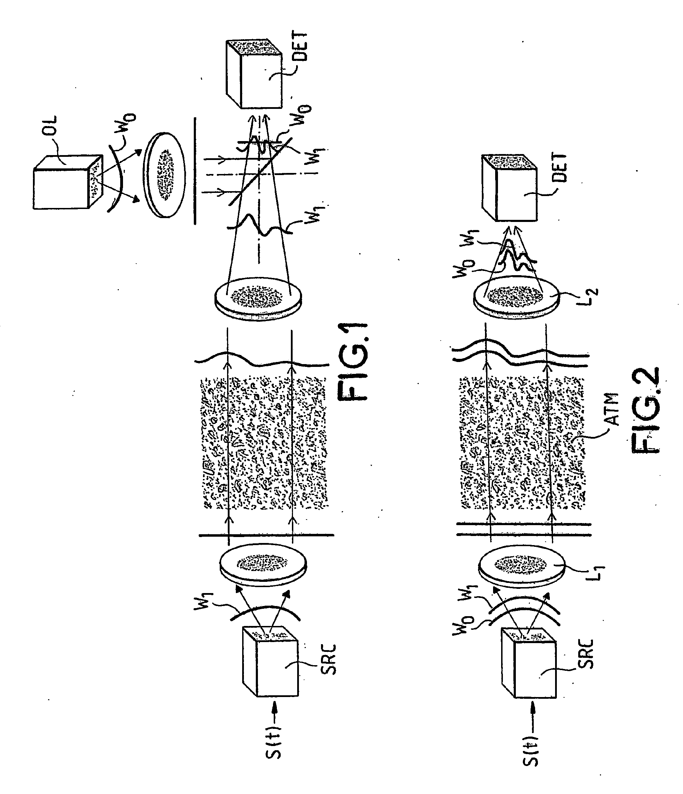

La figure 1 illustre par un schéma le principe de la détection hétérodyne ou cohérente. La détection hétérodyne consiste à superposer au niveau du détecteur DET une onde $W_0$ de pulsation $\omega_0$ issue d'un oscillateur local OL, à l'onde porteuse $W_1$ de pulsation $\omega_1$ et véhiculant le signal de modulation à transmettre (pulsation $\omega_m$). Cette opération revient à mélanger au niveau du détecteur deux ondes de pulsations $\omega_0$ et $\omega_1+\omega_m$, ce qui permet grâce à un filtrage approprié au niveau du détecteur d'augmenter considérablement le rapport signal sur bruit. Comme cela apparaît sur la figure 1, l'onde porteuse $W_1$ émise par des moyens d'émission optique SRC et recevant le signal électrique modulé S(t) à transmettre, présente après propagation en atmosphère libre, un front d'onde distordu. Il en résulte un mélange d'hétérodynage fortement altéré, et une efficacité de transmission réduite. La seule possibilité pour améliorer la détection consisterait alors à disposer d'un système de mise en forme dynamique et adaptatif du front d'onde de l'oscillateur local, ce qui rend le système beaucoup plus complexe.

La présente invention permet de remédier aux inconvénients précités en proposant un système de transmission optique en propagation libre dans l'atmosphère avec une auto-compensation des effets de turbulence.

Pour cela, l'invention propose un système de transmission optique en propagation libre d'au moins un signal numérique d'informations, comprenant des moyens d'émission lumineuse et des moyens de détection optoélectronique adaptés à la détection autour d'au moins une fréquence de détection donnée non nulle, **caractérisé en ce que** lesdits moyens d'émission émettent simultanément pour chaque signal à transmettre deux ondes lumineuses respectivement à deux fréquences optiques distinctes, l'une au moins desdites ondes étant modulée en intensité par ledit signal, et en ce que l'une au moins desdites fréquences de détection est égale à la différence desdites fréquences des ondes lumineuses émises.

Le système de transmission permet grâce à l'auto-compensation des effets de turbulence de pouvoir réaliser une fonction d'hétérodynage grand champ qui augmente l'efficacité de détection.

D'autres avantages et caractéristiques apparaîtront plus clairement à la lecture de la description qui suit, illustrée par les figures annexées qui représentent :

- La figure 1, un système de transmission avec détection hétérodyne selon l'art antérieur (déjà décrite) ;
- La figure 2, un système de transmission selon l'invention ;
- La figure 3, la forme d'un filtre pour les moyens de détection selon l'invention ;
- La figure 4, un schéma illustrant un système de transmission crypté selon l'invention;
- La figure 5, un schéma illustrant un système de transmission selon l'invention permettant de réaliser une fonction de multiplexage.

Sur les figures, les éléments identiques sont repérés par les même références.

La figure 2 décrit par un schéma simplifié le principe du système de transmission optique en propagation libre selon l'invention.

Le système selon l'invention comprend notamment des moyens d'émission lumineuse SRC qui émettent simultanément pour chaque signal $S_1(t)$ numérique d'informations à transmettre deux ondes lumineuses notées $W_0$ et $W_1$, également appelées porteuses, de pulsations respectives $\omega_0$ et $\omega_1$ distinctes, correspondant respectivement aux

fréquences optiques distinctes $\nu_0$ et $\nu_1$. On rappelle que pulsation $\omega_0$, fréquence $\nu_0$ et longueur d'onde $\lambda_0$ sont liées par l'équation

$$\omega_0 = 2\pi \nu_0 = 2\pi c / \lambda_0 \qquad\qquad (1)$$

Où c est la vitesse de la lumière.

Selon l'invention, l'une au moins desdites ondes est modulée en intensité par le signal $S_1(t)$. Une optique de mise en forme $L_1$ par exemple, permet de former eux ondes planes qui vont se propager librement à travers le milieu de propagation perturbé, par exemple l'atmosphère, symbolisé par le repère ATM sur la figure 2. Les ondes sont alors collectées par une optique de collection $L_2$. Selon l'invention, le système de transmission comprend en outre des moyens de détection optoélectronique DET adaptés à la détection autour d'au moins une fréquence de détection égale à la différence $\Delta\nu = \nu_1 - \nu_0$ des fréquences des ondes lumineuses émises. En utilisant ainsi deux porteuses optiques $W_0$ et $W_1$ à l'émission avec codage numérique par présence ou absence d'une ou des deux porteuses optiques, le système de transmission permet une auto-compensation des effets de turbulence. En effet, les deux ondes émises simultanément suivent les mêmes chemins optiques et subissent les mêmes effets de turbulence. Les variations de phase spatiales qui résultent des déformations locales du front d'onde se trouvent ainsi compensés au niveau des moyens de détection, résultant en une amélioration de l'efficacité de détection, comme cela est expliqué ci-dessous.

Les moyens d'émission SRC sont par exemple formés d'une source laser bi-fréquence, dont la faisabilité a été démontrée par exemple par C.Gmachl et al. dans « Quantum cascade lasers with a heterogeneous cascade : two-wavelength operation » (APL, Vol.79, N˚5, pp 572, 2001). Une telle source permet l'émission simultanée de deux ondes de longueurs d'onde différentes dont les intensités d'émission lumineuse peuvent être modulées temporellement par un signal électrique externe. Dans le cas d'utilisation d'une telle source, les deux ondes émises sont modulées simultanément par le signal d'informations $S_1(t)$ à transmettre.

Les moyens d'émission peuvent également être formés de deux émetteurs laser indépendants dont l'intensité d'émission lumineuse de chacun des émetteurs peut être modulée temporellement par un signal électrique externe ; il s'agit par exemple de diodes laser. Ces deux émetteurs peuvent être synchronisés temporellement entre eux pour fournir simultanément le codage du signal à l'émission, ou, comme on le verra par la suite, un des émetteurs peut émettre en continu, seule l'intensité d'émission lumineuse d'un des émetteurs étant modulée par le signal d'informations à transmettre.

Nous expliquons plus en détail le principe du système de transmission selon l'invention, en supposant que les moyens d'émission SRC émettent deux ondes $W_j$ (j=0 ou 1) de pulsation $\omega_j$ sous la forme d'ondes planes et dont les champs associés s'écrivent :

$$\vec{E}_j = \vec{e}_j A_j(t) \cos(w_j t + \varphi_j) \qquad\qquad (2)$$

où $\vec{e}_j$ représente un vecteur unitaire et exprime l'état de polarisation de l'onde émise, $A_j$ est associé à l'amplitude du champ en fonction du temps (fonction enveloppe), $\phi_j$ représente un terme de phase défini à l'émission et propre à chacun des émetteurs.

Au cours de la propagation chaque champ accumule de la phase qui peut varier tout au long du trajet traduisant l'existence de phénomènes de turbulences et donc de fluctuations de l'indice de réfraction. Il s'ensuit que l'expression du champ pour chaque onde devient :

$$\vec{E}_j = \vec{e}_j A_j(t) \cos(\omega_j t + \varphi_j + \varphi(x, y, z)) \qquad\qquad (3)$$

où $\phi(x,y,z)$ est le terme d'accumulation de phase fonction des coordonnées spatiales x, y et z. On considère que les deux porteuses sont proches spectralement. En conséquence, le terme d'accumulation de phase est identique pour chacune des porteuses optiques $W_j$. Cette hypothèse reste valable tant que la dispersion du milieu de propagation reste faible, c'est à dire qu'il y a absence d'absorption résonante. Dans ces conditions, la dégradation du plan d'onde se trouve être similaire sur les deux porteuses.

Au niveau des moyens de détection optoélectronique DET, le champ incident est la somme des champs individuels et l'intensité optique totale $I_T$ s'écrit :

$$I_T \propto \left| \vec{E}_0 + \vec{E}_1 \right|^2 \qquad\qquad (4)$$

où $\vec{E}_0$ et $\vec{E}_1$ sont donnés par l'équation (3).

Cette intensité optique engendre un photocourant $i_d$ qui présente un terme de modulation temporelle correspondant à la différence des fréquences de chaque onde propagée :

$$i_d \propto E_0{}^2 + E_1{}^2 + 2E_0E_1 \cos((\omega_0 - \omega_1)t + (\varphi_0 - \varphi_1) + \varphi(x,y,z) - \varphi(x,y,z)) \quad (5)$$

soit :

$$i_d \propto E_0{}^2 + E_1{}^2 + 2E_0E_1 \cos((\omega_0 - \omega_1)t + (\varphi_0 - \varphi_1)) \qquad\qquad (6)$$

Avec le système de transmission en propagation libre selon l'invention, on réalise ainsi un montage de type hétérodyne qui permet d'auto-compenser les perturbations du plan d'onde induites par le milieu de propagation. La technique proposée permet notamment de pouvoir réaliser une fonction d'hétérodynage grand champ puisque l'on s'est affranchi des perturbations du front d'onde liées à la propagation, ce qui permet d'augmenter l'efficacité de détection.

Un autre avantage du système de transmission selon l'invention concerne la stabilité à l'émission. En effet, il suffit que les deux émetteurs suivent la même dérive en fréquence pour que soit conservé l'écartement en fréquence au niveau des moyens de détection.

Un filtrage approprié au niveau des moyens de détection DET permet alors de détecter la composante à la fréquence de détection $\Delta \nu$.

Avantageusement, les moyens de détection DET du système selon l'invention sont équipés d'un filtre passe-bande centré sur la fréquence de détection donnée par la différence des fréquences des ondes porteuses $W_0$ et $W_1$ et permettant de détecter la modulation du signal autour de ladite fréquence de détection. En utilisant un filtre hyperfréquence par exemple, la différence de fréquences $\Delta \nu$ correspond à une différence entre les longueurs d'onde des deux porteuses de quelques dixièmes de nanomètres à quelques nanomètres. Typiquement, pour une longueur d'onde $\lambda_0$ = 10 $\mu$m de l'onde porteuse $W_0$ et une fréquence de détection $\Delta \nu$ = 10 GHz, la différence de longueurs d'onde entre les porteuses doit être de 3,3 nm.

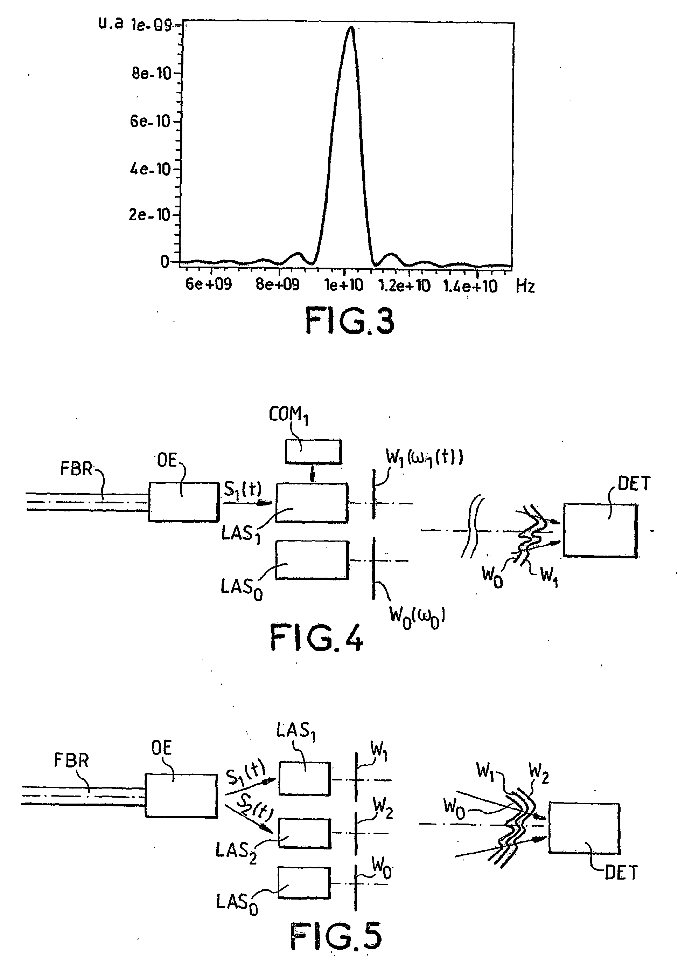

La figure 3 représente selon un exemple préférentiel la forme d'un filtre passe-bande hyperfréquence des moyens de détection. La distribution spectrale (unités arbitraires u.a.) du filtre est représentée en fonction de la fréquence (en Hz). La durée d'un bit élémentaire du signal numérique d'informations à transmettre définit la largeur du filtre hyperfréquence à mettre en oeuvre. Dans l'exemple de la figure 3, la distribution spectrale est donnée par l'équation (6) suivante :

$$S(\nu) = \Delta \tau \times \sin c^2 \left( \left( \pi \nu - \frac{\Delta \nu}{2} \right) \Delta \tau \right) \qquad (6)$$

Où $\Delta \tau$ représente la durée d'un bit.

Ainsi, pour un système opérant à la cadence de 1 Gbits/sec ($\Delta \tau$ = 1 ns) et pour une fréquence de détection (ou fréquence de battement), correspondant à la fréquence centrale du filtre, de 10 GHz, on obtient la fonction de distribution spectrale représentée sur la figure 3.

Selon une variante, le filtrage au niveau des moyens de détection peut être actif, par mélange avec un oscillateur local hyperfréquence à la fréquence $\Delta \nu$. Dans ce cas, le signal à la fréquence $\Delta \nu$ issu du photodétecteur est mélangé dans un mélangeur hyperfréquence à un oscillateur local hyperfréquence à une fréquence $\nu'$. Le signal de sortie du mélangeur, après filtrage, est alors un signal à la fréquence $\nu'-\Delta \nu$ (signal basse fréquence facile à filtrer). Il faut cependant que $\Delta \nu - \nu' > \nu_m$, $\nu_m$ étant la fréquence de modulation du signal à transmettre.

Le codage de l'information peut être transmis de la manière suivante. Si l'une des deux porteuses ou les deux porteuses sont absentes, aucun signal n'est détecté (le terme de modulation est nul dans l'équation (6) ci-dessus), ce qui correspond à un « 0 ». Par contre, il suffit que les deux porteuses soient simultanément émises pour qu'un signal puisse être détecté, ce qui va correspondre à un « 1 » binaire. Ainsi, la modulation peut être obtenue en faisant varier l'intensité soit de l'une, soit des deux ondes porteuses $W_0$ et $W_1$.

Les figures 4 et 5 représentent deux variantes du système de transmission en propagation libre selon l'invention.

La figure 4 représente un schéma d'un système de transmission crypté selon l'invention. Dans cet exemple, on cherche à transmettre un signal issu par exemple d'un signal optique propagé sur une ligne de transmission par fibre optique FBR puis converti par des moyens de conversion optoélectronique OE en un signal électrique numérique $S_1$(t). On suppose par exemple que les moyens d'émission comprennent au moins deux émetteurs laser $LAS_0$ et $LAS_1$ émettant respectivement deux ondes $W_0$ et $W_1$ de fréquences $\nu_0$ et $\nu_1$ l'onde $W_0$ étant continue et l'onde $W_1$ modulée par le signal d'informations $S_1$(t). Selon cet exemple, le système de transmission comprend des moyens de variation temporelle de la fréquence $\nu_1$ de l'onde modulée $W_1$, entraînant une variation temporelle de la fréquence de détection $\Delta\nu(t)=\nu_1(t)-\nu_0$ selon une loi prédéterminée, lesdits moyens de détection DET étant adaptés pour la détection selon cette loi de variation. Par exemple, les moyens de détection sont équipés d'un filtre passe-bande centré sur une fréquence de détection $\Delta\nu_0$ donnée. Lorsque la différence des fréquences $\Delta\nu(t)$ vaut $\Delta\nu_0$, le signal est maximal, lorsqu'elle s'en éloigne, le signal diminue. On peut opérer ainsi un cryptage en déterminant au niveau des moyens de détection quel doit être la fréquence d'apparition du signal maximal. On réalise ainsi un cryptage de l'information permettant de contribuer à sécuriser le système de transmission.

La figure 5 illustre l'application du système de transmission selon l'invention à une transmission multiplexée en longueurs d'onde. La figure 5 illustre le principe pour la transmission de deux signaux numériques d'informations $S_1$(t) et $S_2$(t) mais le principe peut s'étendre à un plus grand nombre de signaux. Selon cet exemple, les moyens d'émission comprennent trois émetteurs laser indépendants $LAS_0$, $LAS_1$, $LAS_2$, l'émetteur $LAS_0$ émettant une première onde lumineuse $W_0$ en continu et les deux autres émetteurs laser émettant deux ondes lumineuses $W_1$, $W_2$ à deux fréquences optiques distinctes $\nu_1$ et $\nu_2$, ces deux ondes étant modulées respectivement par chacun des signaux à transmettre. Selon cette variante, les moyens de détection sont adaptés pour la détection autour de chacune des fréquences de détection correspondantes $\Delta\nu_1 = \nu_1-\nu_0$ et $\Delta\nu_2 = \nu_2-\nu_0$, par exemple au moyen d'un filtre passe-bande présentant deux fenêtres centrées sur lesdites fréquences de détection. Bien entendu, il est également possible d'opérer un cryptage de l'information sur les signaux transmis, comme cela a été décrit précédemment.

Ainsi, le système de transmission en propagation libre décrit dans l'invention permet une détection de type hétérodyne mais avec une auto-compensation des effets de turbulence permettant une détection grand champ plus efficace. Ce système permet de bénéficier des propriétés de directivité liée à l'optique et de l'éventail des techniques de traitement du signal développées en hyperfréquence.

Par ailleurs, avec le développement de diodes à cascade quantique, les fenêtres spectrales adaptées à la transmission dans l'atmosphère en présence de brouillard peuvent être employées. Ainsi, les fenêtres spectrales 3-5 $\mu$m et 10-12 $\mu$m peuvent être exploitées. Or plus la longueur d'onde est élevée, moins les effets de turbulence affectent le plan d'onde, ce qui permet avec le montage proposé d'accroître encore l'efficacité de la détection.

**Revendications**

1. Système de transmission optique en propagation libre d'au moins un signal numérique d'informations ($S_1$(t)), comprenant des moyens d'émission lumineuse (SRC) et des moyens de détection optoélectronique (DET) adaptés à la détection autour d'au moins une fréquence de détection donnée non nulle, **caractérisé en ce que** lesdits moyens d'émission (SRC) émettent simultanément pour chaque signal ($S_1$(t)) à transmettre deux ondes lumineuses ($W_0$, $W_1$) respectivement à deux fréquences optiques distinctes ($\nu_0$, $\nu_1$), l'une au moins desdites ondes étant modulée en intensité par ledit signal, et **en ce que** l'une au moins desdites fréquences de détection est égale à la différence ($\Delta\nu$) desdites fréquences des ondes lumineuses émises.

2. Système de transmission selon la revendication 1, **caractérisé en ce que** les deux ondes lumineuses ($W_0$, $W_1$) sont synchronisées et modulées en intensité par ledit signal à transmettre ($S_1$(t)).

3. Système de transmission selon la revendication 1, **caractérisé en ce qu'**une première desdites ondes lumineuses ($W_0$) est émise en continu, l'autre ($W_1$) étant modulée par ledit signal à transmettre ($S_1$(t)).

4. Système de transmission selon la revendication 3, **caractérisé en ce qu'**il comprend des moyens de variation temporelle de la fréquence ($\nu_1$) de ladite onde modulée ($W_1$), entraînant une variation temporelle de la fréquence de détection ($\Delta\nu(t)$) selon une loi prédéterminée, lesdits moyens de détection (DET) étant adaptés pour la détection selon cette loi de variation.

5. Système de transmission d'au moins deux signaux ($S_1$(t), $S_2$(t)) selon l'une des revendications 3 ou 4, **caractérisé en ce que** les moyens d'émission (SRC) émettent une première onde lumineuse en continu ($W_0$) et au moins deux

ondes lumineuses ($W_1$, $W_2$) à deux fréquences optiques distinctes ($\nu_1$, $\nu_2$) modulées respectivement par chacun des signaux à transmettre, et **en ce que** les moyens de détection (DET) sont adaptés pour la détection autour de chacune des fréquences de détection correspondantes ($\Delta\nu_1$, $\Delta\nu_2$).

6. Système de transmission selon l'une des revendications précédentes, **caractérisé en ce que** les moyens d'émission comprennent au moins deux émetteurs laser émettant en continu, et dont l'intensité d'émission lumineuse peut être modulée temporellement par un signal électrique externe.

7. Système de transmission selon la revendication 6, **caractérisé en ce que** lesdits émetteurs sont des diodes lasers.

8. Système de transmission selon l'une des revendications 1 ou 2, **caractérisé en ce que** les moyens d'émission comprennent au moins une diode à cascade quantique avec émission bi-fréquence, dont l'intensité d'émission lumineuse peut être modulée temporellement par un signal électrique externe.

9. Système de transmission selon l'une des revendications précédentes, **caractérisé en ce que** les moyens de détection (DET) comprennent des moyens de filtrage passe-bande autour de la ou desdites fréquence(s) de détection, la largeur de chaque bande étant définie par la durée d'un bit dudit signal à transmettre.

10. Système de transmission selon la revendication 9, **caractérisé en ce que** la distribution spectrale dudit filtre autour d'une fréquence de détection est du type :

$$S(\nu) = \Delta\tau \times \sin c^2\left(\left(\pi\nu - \frac{\Delta\nu}{2}\right)\Delta\tau\right)$$

où $\Delta\nu$ est ladite fréquence de détection, $\Delta\tau$ est la durée d'un bit du signal à transmettre, $\nu$ est la fréquence.

11. Système de transmission selon l'une des revendications 1 à 8, **caractérisé en ce que** les moyens de détection (DET) comprennent des moyens de filtrage actif par mélange avec un oscillateur local hyperfréquence.

**Claims**

1. An optical transmission system with free propagation for at least one digital data signal ($S_1(t)$), including light emitting means (SRC) and optoelectronic detection means (DET) designed for detection around at least one predetermined non-zero detection frequency, **characterised in that** said emitting means (SRC) simultaneously emit, for each signal ($S_1(t)$) to be transmitted, two light waves ($W_0$, $W_1$), respectively at two distinct optical frequencies ($\nu_0$, $\nu_1$), at least one of said waves being intensity modulated by said signal, and **in that** at least one of said detection frequencies is equal to the difference ($\Delta\nu$) of said frequencies of the emitted light waves.

2. The transmission system according to claim 1, **characterised in that** the two light waves ($W_0$, $W_1$) are synchronised and intensity modulated by said signal to be transmitted ($S_1(t)$).

3. The transmission system according to claim 1, **characterised in that** a first one of said light waves ($W_0$) is continuously emitted, the other ($W_1$) being modulated by said signal to be transmitted ($S_1(t)$).

4. The transmission system according to claim 3, **characterised in that** it includes means for temporal variation of the frequency ($\nu_1$) of said modulated wave ($W_1$), causing a temporal variation of the detection frequency ($\Delta\nu(t)$) according to a predetermined rule, said detection means (DET) being designed for detection according to this variation rule.

5. The transmission system of at least two signals ($S_1(t)$, $S_2(t)$) according to any one of claims 3 to 4, **characterised in that** the emitting means (SRC) continuously emit a first light wave ($W_0$) and at least two light waves ($W_1$, $W_2$) at two distinct optical frequencies ($V_1$, $V_2$), respectively modulated by each of the signals to be transmitted, and **in that** the detection means (DET) are designed for detection around each of the corresponding detection frequencies ($\Delta\nu_1$, $\Delta\nu_2$).

**6.** The transmission system according to any one of the preceding claims, **characterised in that** the emitting means include at least two continuously emitting laser emitters, the light emitting intensity of which may be temporally modulated by an external electrical signal.

**7.** The transmission system according to claim 6, **characterised in that** said emitters are laser diodes.

**8.** The transmission system according to any one of claims 1 to 2, **characterised in that** the emitting means include at least one quantum cascade diode with bi-frequency emission, the light emitting intensity of which may be temporally modulated by an external electrical signal.

**9.** The transmission system according to any one of the preceding claims, **characterised in that** the detection means (DET) include band-pass filtering means around the detection frequency/ies, the width of each band being defined by the duration of one bit of said signal to be transmitted.

**10.** The transmission system according to claim 9, **characterised in that** the spectral distribution of said filter around a detection frequency is of the following type:

$$S(\nu) = \Delta\tau \times \sin c^2\left(\left(\pi\nu - \frac{\Delta\nu}{2}\right)\Delta\tau\right)$$

where $\Delta\nu$ is said detection frequency, $\Delta\tau$ is the duration of one bit of the signal to be transmitted and $\nu$ is the frequency.

**11.** The transmission system according to any one of claims 1 to 8, **characterised in that** the detection means (DET) include active filtering means by mixing with a local hyper-frequency oscillator.

**Patentansprüche**

**1.** System zur optischen Übertragung mit freier Ausbreitung von mindestens einem digitalen Informationssignal ($S_1$(t)), das Lichtemissionsmittel (SRC) und optoelektronische Detektionsmittel (DET) für eine Detektion um mindestens eine gegebene Detektionsfrequenz von ungleich null umfasst, **dadurch gekennzeichnet, dass** die Emissionsmittel (SRC) gleichzeitig für jedes zu übertragende Signal ($S_1$(t)) zwei Lichtwellen ($W_0$, $W_1$) jeweils mit zwei verschiedenen optischen Frequenzen ($\nu_0$, $\nu_1$) aussenden, wobei mindestens eine der Wellen in ihrer Intensität durch das Signal moduliert wird, und **dadurch**, dass mindestens eine der Detektionsfrequenzen gleich der Differenz ($\Delta\nu$) der Frequenzen der ausgesendeten Lichtwellen ist.

**2.** Übertragungssystem nach Anspruch 1, **dadurch gekennzeichnet, dass** die beiden Lichtwellen ($W_0$, $W_1$) durch das zu übertragende Signal ($S_1$(t)) synchronisiert und in ihrer Intensität moduliert werden.

**3.** Übertragungssystem nach Anspruch 1, **dadurch gekennzeichnet, dass** eine erste der Lichtwellen ($W_0$) kontinuierlich ausgesendet wird und die andere ($W_1$) durch das zu übertragende Signal ($S_1$(t)) moduliert wird.

**4.** Übertragungssystem nach Anspruch 3, **dadurch gekennzeichnet, dass** es Mittel zum zeitlichen Variieren der Frequenz ($\nu_1$) der modulierten Welle ($W_1$) umfasst, die eine zeitliche Variation der Detektionsfrequenz ($\Delta\nu$(t)) gemäß einem vorbestimmten Gesetz mit sich bringt, wobei die Detektionsmittel (DET) für eine Detektion gemäß diesem Variationsgesetz angepasst sind.

**5.** System zum Übertragen von mindestens zwei Signalen ($S_1$(t), $S_2$(t)) nach einem der Ansprüche 3 oder 4, **dadurch gekennzeichnet, dass** die Emissionsmittel (SRC) eine erste Lichtwelle ($W_0$) kontinuierlich und mindestens zwei Lichtwellen ($W_1$, $W_2$) mit zwei verschiedenen optischen Frequenzen ($\nu_1$, $\nu_2$) aussenden, die jeweils durch jedes der zu übertragenden Signale moduliert werden, und **dadurch**, dass die Detektionsmittel (DET) für eine Detektion um jede der entsprechenden Detektionsfrequenzen ($\Delta\nu_1$, $\Delta\nu_2$) angepasst sind.

**6.** Übertragungssystem nach einem der vorherigen Ansprüche, **dadurch gekennzeichnet, dass** die Emissionsmittel mindestens zwei kontinuierlich emittierende Laseremitter umfassen, deren Lichtemissionsintensität zeitlich durch ein externes elektrisches Signal moduliert werden kann.

**7.** Übertragungssystem nach Anspruch 6, **dadurch gekennzeichnet, dass** die Emitter Diodenlaser sind.

**8.** Übertragungssystem nach einem der Ansprüche 1 oder 2, **dadurch gekennzeichnet, dass** die Emissionsmittel mindestens eine Quantenkaskadendiode mit Zweifrequenz-Emission umfassen, deren Lichtemissionsintensität zeitlich durch ein externes elektrisches Signal moduliert werden kann.

**9.** Übertragungssystem nach einem der vorherigen Ansprüche, **dadurch gekennzeichnet, dass** die Detektionsmittel (DET) Passbandfiltermittel um die Detektionsfrequenz(en) umfassen, wobei die Breite jedes Bandes durch die Dauer eines Bits des zu übertragenden Signals definiert wird.

**10.** Übertragungssystem nach Anspruch 9, **dadurch gekennzeichnet, dass** die Spektrumsverteilung des Filters um eine Detektionsfrequenz vom folgenden Typ ist:

$$S(\nu) = \Delta \tau \times \sin c^2 \left( \left( \pi \nu - \frac{\Delta \nu}{2} \right) \Delta \tau \right)$$

wobei $\Delta\nu$ die Detektionsfrequenz, $\Delta\tau$ die Dauer eines Bits des zu übertragenden Signals und $\nu$ die Frequenz ist.

**11.** Übertragungssystem nach einem der Ansprüche 1 bis 8, **dadurch gekennzeichnet, dass** die Detektionsmittel (DET) aktive Filtermittel durch Mischen mit einem lokalen Höchstfrequenzoszillator umfassen.

**FIG.1**

**FIG.2**

EP 1 459 464 B1

FIG.3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 5777768 A

**Littérature non-brevet citée dans la description**

• **C.Gmachl et al.** Quantum cascade lasers with a heterogeneous cascade : two-wavelength operation. *APL,* 2001, vol. 79 (5), 572